# EUROPÄISCHE PATENTANMELDUNG

(11) **EP 3 945 708 A1**
(43) Veröffentlichungstag der Anmeldung: **02.02.2022**
(21) Anmeldenummer: 20188412.9
(22) Anmeldetag: 29.07.2020
(51) Int. Cl.: H04L 29/08, G05B 19/042, G06Q 50/02

(54) **DYNAMISCHES VORHALTEN VON KONTEXTABHÄNGIGEN RECHNERGESTÜTZTEN FUNKTIONALITÄTEN IN MOBILEN, VERTEILTEN EDGE CLOUDS**

(71) Anmelder: Siemens Aktiengesellschaft, 80333 München (DE)
(72) Erfinder: Huth, Hans-Peter, 80638 München (DE); Sauer, Markus, 81739 München (DE); Zeiger, Florian, 85635 Höhenkirchen-Siegertsbrunn (DE)

(57) **Zusammenfassung**

Die Erfindung gibt ein automatisiertes Verfahren zur Bereitstellung von Funktionalitäten mindestens einer mobilen Einheit (1) für mindestens einer davon abgesetzt benötigten Funktion einer Nachfrageeinheit (2) an,
- wobei in der mobilen Einheit (1) die benötigte Funktion vorgehalten wird (101),
- wobei die Ausführung der Funktion kontextabhängig ist,
- wobei für die Ausführung der Funktion ein Kontextregelwerk in der mobilen Einheit (1) vorgehalten wird (102) und
- wobei bei einer Erfüllung einer oder mehrerer Regeln des Kontextregelwerks die Funktion in der mobilen Einheit (1) ausgeführt wird (103).

Ein zugehöriges System (5) wird ebenfalls angegeben.

## Beschreibung

### GEBIET DER ERFINDUNG

Die Erfindung betrifft ein automatisiertes Verfahren, insbesondere ein computerimplementiertes Verfahren, sowie ein System zur Bereitstellung von Funktionalitäten einer mobilen Einheit für mindestens einer davon abgesetzt benötigten Funktion einer Nachfrageeinheit. Bevorzugt ist die mobile Einheit ein mobiler Edge Knoten einer Edge Cloud.

### HINTERGRUND DER ERFINDUNG

Neue Geschäftsmodelle und neue Entwicklungen im technischen Bereich führen dazu, dass der Bedarf an Rechenkapazität und Rechenfunktionalität in der räumlichen Nähe von anfallender Sensordaten oder von Aktuatoren im Feld steigt. Ursachen dafür sind neben den neuen technischen Möglichkeiten vor allem auch technische Limitierungen, wie beispielsweise die fehlende Möglichkeit zur Übertragung großer Datenmengen.

Heute typische Architekturen laden beispielsweise alle von Sensoren erfassten Daten in eine Cloud-Applikation hoch, dort werden die Daten verarbeitet und die abgeleiteten Aktionen werden an die Systeme im Feld weitergegeben. Dies ist aber teilweise aufgrund der riesigen Datenmengen und herrschender Bandbreitenbeschränkungen oder anderer Applikationsanforderungen (z.B. geringe Latenz) faktisch nicht möglich oder einfach nicht sinnvoll bzw. mit den bekannten technischen Möglichkeiten nicht durchführbar.

Typische Anwendungsbeispiele sind im Smart City / Mobility Umfeld autonome Fahrzeuge, bei denen eine Kommunikationsinfrastruktur eventuell noch möglich wäre, aber wenig sinnvoll ist. Die Fahrzeuge erzeugen in etwa 4.000 GB / Tag an Daten, die primär für lokal relevante Entscheidungen genutzt werden. Ein Transfer dieser Datenmengen in Cloud-Applikationen ist dabei wenig sinnvoll, kostenintensiv und kann ggf. auch andere Anforderungen, wie beispielsweise die Latenz, verletzen.

Ein weiteres Beispiel sind Anwendungen in einem landwirtschaftlichen oder Off-shore maritimen Umfeld. Hierbei können neue datenintensive Anwendungen mit Data-Analytics, künstlicher Intelligenz oder Autonomie Funktionen aufgrund mangelnder Kommunikationsinfrastruktur nicht mehr mit hierarchischen statischen Cloud-Architekturen gelöst werden.

Die Arbeitsgebiete, die sich mit diesen Themen der Bereitstellung von Rechenressourcen im Feld auseinandersetzten, sind Edge und Fog Computing. Typischerweise werden heutzutage Lösungen vorgeschlagen, bei denen während der Systemauslegung die auszuführenden Applikationen und die Ausführung der Umgebungen geplant werden und ggf. Rechenressourcen in Form von zusätzlichen Edge Knoten je nach Bedarf mit vorgehalten werden. "Edge Knoten" sind Geräte mit Rechenleistung, Speicher und Kommunikationsfähigkeiten, die typischerweise zwischen den Endgeräten und einer Cloud platziert sind und - ähnlich einem Rechenzentrum - beliebige Anwendung ausführen können.

Dies berücksichtigt aber weder die mögliche Mobilität von Edge Ressourcen, beispielsweise Fahrzeuge mit Rechenleistung, wie Autos, Traktoren, Schiffe, Flugzeuge, etc., noch die potenzielle Dynamik von Aufgaben, die von der sich bildenden dynamische Edge Cloud, z.B. neue Datenerhebungen an ausgewählten Orten, Kommunikationsaufgaben, Analyse Aufgaben, etc., ausgeführt werden sollen.

### ZUSAMMENFASSUNG DER ERFINDUNG

Es ist Aufgabe der Erfindung, eine Lösung anzugeben, um mobile, ungenutzte Rechenressourcen einem System einfach und kostengünstig zugänglich zu machen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, die potenzielle Mobilität von Einheiten, wie Edge Knoten, zu Nutze zu machen, um durch (technisch) kostengünstiges, redundantes Vorhalten von Regeln und von entsprechenden Funktionstemplates anderen Komponenten des Systems aufgrund von Vorhersagemechanismen diese Funktionalität zur Verfügung stellen zu können. Dadurch wird es möglich, mobile ungenutzte Rechenressourcen einem System dynamisch und kontextabhängig zugänglich zu machen und beispielsweise sinnvoll für datenintensive Funktionen in beispielsweise mobilen Edge-Cloud Use Cases zu nutzen. Hierdurch werden insbesondere auch Applikationen möglich, die gemäß dem Stand der Technik aufgrund von Kommunikations- und Kosteneinschränkungen nicht oder nur eingeschränkt möglich sind.

Eine ähnliche dynamische, kontextabhängige Lösung ist nicht bekannt. Aktuelle Ansätze lösen das Problem durch Vorhalten ausreichender lokaler Rechenressourcen oder der Bereitstellung von Kommunikationsverbindungen, die aber einen Großteil der Betriebszeit nicht genutzt werden. Viele wünschenswerte neue mobile Edge Cloud Anwendung sind mit aktuellen Konzepten nicht umsetzbar.

Eine Cloud-basierte oder Edge Cloud-basierte IoT-Anwendung besteht aus mehreren virtuellen und physikalischen Recheneinheiten, Datenquellen, Aktuatoren, Funktionen, Diensten, etc., die durch Kommunikation eine oder mehrere systemübergreifende Gesamtapplikationen realisieren. In heutigen IoT-Systemen wird typischerweise jede Teilfunktion (z.B. Service-Applikation oder Analyse-Funktion) einer Komponente zum Designzeitpunkt dediziert im System zugewiesen. Im erfindungsgemäßen System werden derartige Funktionen oder Teilfunktionen dynamisch von Systemkomponenten, beispielsweise einem landwirtschaftlichen Betrieb mit seinem Farmmanagement System auf einem Smartphone eines Landwirts, zur Laufzeit angefordert, und dann kontextspezifisch ausgeführt. Die ausführenden Edge Knoten sind potenziell mobil und der Kontext (insbesondere räumlich) ist damit nicht fix und in der Regel auch nicht deterministisch.

Funktionsanforderungen bestehen im erfindungsgemäßen System aus einer oder mehrerer Regeln eines Kontextregelwerks (z.B. "Mobiler Edge-Knoten im Bereich x,y" und "Es regnet gleichzeitig im Bereich x,y"), einer Beschreibung der Edge Knoten Eigenschaften und der entsprechenden Aufgabe bzw. Funktion in Form z.B. eines auszuführenden Skripts, eines Funktions-Containers, einer Applikation oder einer Netzwerkkonfiguration. Dieses Tupel aus Funktion und Regeln wird in das System eingebracht und auf mobile Einheiten, wie Edge Knoten, die für diese Aufgabe in Frage kommen, übertragen. Mobile Einheiten sind beschrieben durch die Funktionalität, die sie bereitstellen, die HW und Betriebssystemeigenschaften sowie nicht-funktionale Eigenschaften, wie z.B. Sicherheitsmerkmale (IT Security), Kosten, Eigentümer, aktueller Ort, etc.

Die Zuweisung der Funktionen kann nach fest programmierten Abläufen geschehen oder durch eine zentrale bzw. dezentrale Vorhersage-Komponente, die die zukünftigen Kontexte für das System vorhersagt und daher mit einer ausreichenden Zuverlässigkeit ein Set an potenziellen mobilen Einheiten bestimmt, auf denen die Funktionen bzw. Aufgaben zukünftig potenziell ausgeführt werden könnten.

Wird eine Funktion bzw. Aufgabe auf eine mobile Einheit übertragen, wird diese dort zunächst nicht sofort ausgeführt. Stattdessen werden die Regeln auf dieser mobilen Einheit in einer Regel-Engine über ein Regel-Management installiert und die Funktion auf der mobilen Einheit in einem Funktions-Repository oder ähnlichem hinterlegt.

Bewegt sich die mobile Einheit, also zum Beispiel der Edge Knoten, in den entsprechenden Kontext, oder befindet sich die mobile Einheit schon in dem entsprechenden Kontext, so dass das Regelwerk für eine vorgegeben Aufgabe triggert, wird die entsprechende Funktion auf der mobilen Einheit instanziiert und ausgeführt. Sobald die Funktion/Aufgabe abgeschlossen ist, wird das Ergebnis an den entsprechenden Auftraggeber (= Nachfrageeinheit) nach vorgegebenen Regeln übermittelt.

Ein weiterer Aspekt der Erfindung besteht darin, aufgrund der entsprechenden Vorhersagen die Regeln und Funktionen auf mehreren mobilen Einheiten gleichzeitig vorzuhalten, um über eine derartige Redundanz eine ausreichende Wahrscheinlichkeit zu erreichen, dass die Aufgabe bzw. Funktion ausgeführt wird. In einem extremen Fall wird die Aufgabe bzw. Funktion allen mobilen Einheiten des Systems zugewiesen.

Vorteile eines derartigen Systems mit mobilen Einheiten sind:
- Eine Bereitstellung von Funktionen, die sonst lokale nicht zur Verfügung stehen.
- Eine dynamische Nutzbarmachung von ungenutzten Ressourcen auf beispielsweise mobilen Edge und IoT Geräten.
- Das Vorhalten von Funktionalitäten wird reduziert auf einen Speicherplatz für das Vorhalten der Funktionalität und den Regeln, die zur Ausführung der Funktionen führen. Dafür entstehen an dem System keine Aufwände (z.B. Energieverbrauch durch Funktionsausführung) und andere ausgeführte Funktionen auf dem System werden nicht beeinflusst.
- Ein kontextbezogener Deployment Mechanismus für Funktionen und Software Komponenten, die ggf. nur Kommunikationsverbindungen mit einer niederen Bandbreite haben.
- Die Autarkie eines Gerätes, z.B. bei Ausfall der Kommunikation, wird erhöht.

Die Erfindung beansprucht ein automatisiertes, insbesondere computerimplementiertes Verfahren zur Bereitstellung von Funktionalitäten mindestens einer mobilen Einheit für mindestens einer davon abgesetzt benötigten Funktion einer Nachfrageeinheit,
- wobei in der mobilen Einheit die benötigte Funktion vorgehalten wird,
- wobei die Ausführung der Funktion kontextabhängig ist,
- wobei für die Ausführung der Funktion ein Kontextregelwerk in der mobilen Einheit vorgehalten wird und
- wobei bei einer Erfüllung einer oder mehrerer Regeln des Kontextregelwerks die Funktion in der mobilen Einheit ausgeführt wird.

Kontext im IT-Umfeld meint jede Art von Information, die dazu verwendet werden kann, die Situation einer Entität in Interaktion mit anderen Entitäten zu charakterisieren. Da Kontext von der jeweiligen Interaktion abhängt, kann man für eine Information nicht pauschal beantworten, ob sie Kontext ist oder nicht. Kontext kann dabei eine einzelne Information sein oder eine Kombination aus vielen Informationen unterschiedlicher Quellen oder verschiedener Zeitpunkte. Kontext bildet die Grundlage für kontextsensitive Anwendungen. Kontextsensitivität bzw. Kontext-bezogen bezeichnet das Verhalten von Anwendungsprogrammen, die Informationen über ihren "Kontext", also ihre Umgebung, benutzen, um ihr Verhalten darauf abzustimmen.

Funktionalitäten sind beispielsweise Rechenkapazität oder Kommunikationskapazität. "Funktion" schließt auch die Abarbeitung einer Aufgabe bzw. einer Aufgabenstellung mit ein. "Funktion" kann auch als "Anwendungsprogramm" bezeichnet werden.

In einer Weiterbildung kann die mobile Einheit ein Edge Knoten einer Edge Cloud und die Nachfrageeinheit ein Teil der Edge Cloud sein.

In einer weiteren Ausgestaltung kann nach dem Ausführen der Funktion das Ergebnis an die Nachfrageeinheit gemäß dem Kontextregelwerk übermittelt werden. Das heißt, auch die Rückübermittlung an die Nachfrageeinheit erfolgt Regel-basiert. In einer weiteren Ausführungsform kann aufgrund eines Vorhersagemodells das Kontextregelwerk und die mindestens eine Funktion auf mindestens zwei mobilen Einheiten redundant vorgehalten werden, wobei das Vorhersagemodell ausgebildet ist, über die geschaffene Redundanz eine vorgegebene Wahrscheinlichkeit, die Funktion auszuführen, zu erreichen.

In einer weiteren Ausgestaltung kann die mobile Einheit eingerichtet sein, weiteren mobilen Einheiten zu übermitteln, welche Regeln bei der mobilen Einheit getriggert haben und welche Funktion ausgeführt wird.

In einer weiteren Ausprägung kann die Nachfrageeinheit eingerichtet sein, die Wichtigkeit und/oder Dringlichkeit der Ausführung der Funktion an die mobile Einheit zu übertragen.

Die Erfindung beansprucht auch ein System, aufweisend:
- mindestens eine Nachfrageeinheit,
- mindestens eine mobile Einheit, die eingerichtet ist, Funktionalitäten für mindestens einer davon abgesetzt benötigten Funktion der Nachfrageeinheit bereitzustellen und bei Bedarf auszuführen, wobei die Ausführung der Funktion kontextabhängig ist,
- ein in der mobilen Einheit ausgebildetes Regel Engine Modul, das eingerichtet ist, die Funktion anhand eines in dem Regel Engine Modul gespeicherten Kontextregelwerks auszuführen, wobei bei einer Erfüllung einer oder mehrerer Regeln des Kontextregelwerks die Funktion in der mobilen Einheit ausgeführt wird oder die schon ausgeführte Funktion gestoppt wird.

In einer Weiterbildung weist das System auf:
- ein in der mobilen Einheit ausgebildetes Funktion Runtime Modul, das eingerichtet ist, die Funktion zu instanziieren und diese isoliert von weiteren Funktionen auszuführen.

In einer weiteren Ausgestaltung weist das System auf:
- ein in der mobilen Einheit ausgebildetes Kontext Management Modul, das eingerichtet ist, den aktuellen Kontext der mobilen Einheit zu ermitteln.

In einer weiteren Ausführungsform weist das System auf:
- ein in der mobilen Einheit ausgebildetes Regel Management Modul, das eingerichtet ist, das Kontextregelwerk vorzuhalten.

In einer weiteren Ausführungsform weist das System auf:
- ein in der mobilen Einheit ausgebildetes Funktions-Repository Modul, das eingerichtet ist, die Funktionen zu speichern, die potenziell ausgeführt werden sollen, und dem Funktion Runtime Modul zur Verfügung zu stellen.

In einer weiteren Ausgestaltung weist das System auf:
- ein in der mobilen Einheit ausgebildetes Kontext Predictor Modul, das eingerichtet ist, den Kontext der mobilen Einheit vorherzusagen.

In einer weiteren Ausprägung weist das System auf:
- ein in der mobilen Einheit ausgebildetes Kontext Sensor Modul, das eingerichtet ist, Informationen über den Kontext zu generieren, insbesondere Daten von Sensoren zu erfassen.

In einer weiteren Ausbildung weist das System auf:
- eine Movement, Path, Coverage und Kontext Predictor Komponente, die eingerichtet ist, den Komponenten des Systems Kontexte vorherzusagen, insbesondere Bewegungsprofile, und der mobilen Einheit zur Verfügung zu stellen.

In einer weiteren Ausführungsform können das System als Edge Cloud und die mobile Einheit als Edge Knoten ausgebildet sein.

Weitere Besonderheiten und Vorteile der Erfindung werden aus den nachfolgenden Erläuterungen eines Ausführungsbeispiels anhand von schematischen Zeichnungen ersichtlich.

### KURZE BESCHREIBUNG DER ZEICHNUNGEN

Es zeigen:
- FIG. 1: ein Blockschaltbild eines Ausführungsbeispiels und,
- FIG. 2: ein Ablaufdiagramm eines Verfahrens zur kontextbezogenen Bereitstellung von Rechenleistung.

### DETAILLIERTE BESCHREIBUNG DER ERFINDUNG

Zukünftige IoT Systeme und Edge Cloud Systeme werden aus einer Vielzahl unterschiedlicher Komponenten bestehen. Dabei werden diese Komponenten verschiedene Eigenschaften mit in das System einbringen. In zunehmendem Maße werden Komponenten mobil sein, bzw. es wird Rechenleistung auf mobilen Einheiten verfügbar sein. Des Weiteren können die zu erbringenden Aufgaben/Funktionen sowie die vorhandene Kommunikationsinfrastruktur ortsabhängig sein. Eine manuelle Konfiguration eines so komplexen Systems ist sehr aufwändig und auch fehleranfällig. Um einen zuverlässigen Betrieb einer derart komplexen und dynamischen Systemtopologie zu ermöglichen, schafft der erfindungsgemäße Mechanismus eine Umgebung zur automatisierten und nachvollziehbaren Planung, Verteilung und Ausführung von Funktionen/Aufgaben.

Kern der Erfindung ist die Schaffung der technischen Möglichkeit, beispielsweise auf Basis von lernenden Vorhersagemechanismen, Funktionen zur Ausführung ggf. mehrfach und redundant zusammen mit Kontextregeln mitzugeben. Diese werden dann erst beim Triggern der Kontextbedingungen in den Ausführungszustand überführt. Der Kontext (siehe Details dazu auch weiter oben) kann hier durch physikalische Größen, Objekteigenschaften (z.B. Geo-Position, Bewegungsprofile, Pfade und Coverage der mobilen Einheit beispielsweise (Edge) Cloud oder Kommunikationsinfrastruktur) und/oder Umgebungseigenschaften (z.B. Vorhandensein bestimmter Voraussetzungen wie einer externen Energiequelle oder auch örtliche Nähe von Systemteilnehmern/Nutzern) bestimmt werden.

Auch kann der Kontext durch Ergebnisse aus Berechnungen bestimmt werden (z.B. Vorhersagen basierend auf KI-Algorithmen oder Modellen, Simulationen, Emulationen, etc.) und auch aus mehreren abhängigen oder unabhängigen Parametern definiert sein. Des Weiteren können geschäftliche Regeln oder Nutzervorlieben berücksichtigt werden.

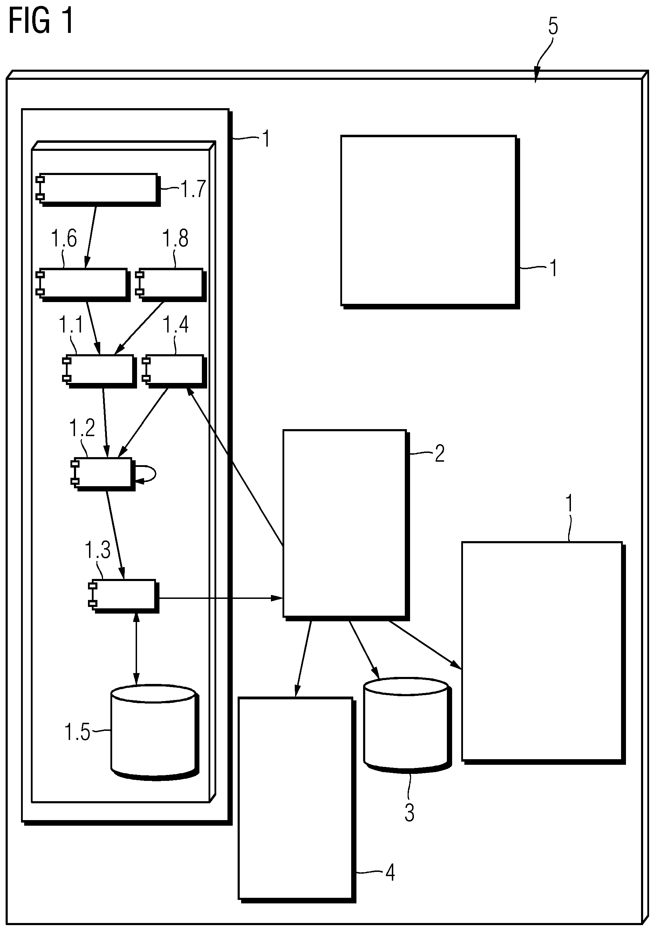

FIG. 1 zeigt als Ausführungsbeispiel ein Blockschaltbild eines Systems mit einer Edge Cloud 5. Das System weist folgende Komponenten auf:
- Mehrere mobile Edge Knoten 1, die potenziell Rechen-, Kommunikations- und/ oder Speicherfunktionen übernehmen können. Diese haben u.a. folgende Module:
   ∘ Kontext Management Modul 1.1; ein Modul zur Bestimmung des aktuellen Kontextes des Edge Knotens (z.B. aktuelle Bewegungsplanung)
   ∘ Regel Engine Modul 1.2; dieses Modul überprüft bei jedem Kontextwechsel ob ein Set von Regeln für eine Funktion erfüllt ist, oder bei ausgeführten Funktionen die Regeln nicht mehr triggern. Diese Informationen werden an das Funktion Runtime Modul 1.3 weitergegeben und entsprechende Funktionen werden entweder instanziiert oder gestoppt.
   ∘ Funktion Runtime Modul 1.3; dieses Modul instanziiert die entsprechenden Funktionen und führt diese isoliert von anderen Funktionen aus.
   ∘ Regel Management Modul 1.4; dieses Modul hält das entsprechende Kontextregelwerk (ein Set von Regeln) vor, das zur Ausführung von Funktionen auf dem mobilen Edge Knoten 1 führen soll.
   ∘ Funktions-Repository Modul 1.5; dieses Modul speichert alle Funktionen, die potenziell ausgeführt werden sollen, und stellt sie den anderen Modulen insbesondere dem Funktion Runtime Modul 1.3 zur Verfügung.
   ∘ Lokales Kontext Predictor Modul 1.6; es ist ein lokales Modul zur Vorhersage des Kontextes auf dem Edge Knoten 1.
   ∘ Kontext Historie Modul 1.7; ein Modul, das die Historie über alle relevanten Daten für eine Kontextvorhersage speichert.
   ∘ Kontext Sensor Modul 1.8; ein Modul, das die Kontextinformationen generiert, wie zum Beispiel Daten von Sensoren oder über Funktionen.
- Eine Aufgaben-/Funktionsersteller Komponente 2 als Nachfrageeinheit; diese Systemkomponente erstellt Aufgaben, die in der mobilen Edge Cloud 3 ausgeführt werden sollen. Dazu wird in der Komponente 2 beispielsweise aus Funktionstemplates, den entsprechenden Parametern und einem Set von Kontextregeln eine Aufgabe für das System generiert und die Ausführung der Aufgabe im System angefordert. Die Anforderung kann z.B. durch einen Menschen aber auch automatisiert durch eine andere Automatisierungskomponente auf Basis von Event Triggern erfolgen.
- Eine optionale Funktions-Repository Komponente 3; sie ist/sind eine oder mehrere zentral oder dezentral organisierte Ablage(n), die möglichen Funktionen in Form von z.B. Container, Skripten, Netzwerkfunktionen beispielsweise als Templates anderen Komponenten zur Verfügung stellt.
- Eine Movement, Path, Coverage und Kontext Predictor Komponente 4; eine Komponente, die zentral oder dezentral logisch realisiert den anderen Komponenten Kontextvorhersagen (z.B. Bewegungsprofile) der mobilen Edge Knoten 1 im System zur Verfügung stellt. Diese Komponente 4 kann für jeden einzelnen mobilen Edge Knoten 1, für jeden Kunden / Tenant (= Nachfrageeinheit) im System oder das ganze Eco-System realisiert sein.

In einer weiteren Ausprägung, macht ein mobiler Edge Knoten 1 den anderen potenziellen mobilen Edge Knoten 1 bekannt, welche Regeln bei ihm getriggert haben und welche Funktionen er daraufhin ausführt und ggf. auch wie der entsprechende Ausführungsstatus ist. Die anderen mobilen Edge Knoten 1, die dieselbe Funktion bzw. Aufgabe vorhalten, können dann beispielsweise diese Information so interpretieren, dass sie diese Funktion nicht ausführen müssen, wenn entsprechende Regeln bei ihnen triggern, da die Funktion bereits durch einen anderen mobilen Edge Knoten 1 ausgeführt wird. Alternativ kann die Funktion beispielsweise auch redundant ausgeführt werden.

Auch kann ein Edge Knoten 1 Stromsparfunktionen nutzen oder den Hauptspeicher entlasten, wenn gewisse Anwendungen aktuell nicht benötigt werden, indem er diese z.B. stoppt, auslagert oder mit verminderter Geschwindigkeit ausführt. Die Form der Reaktion auf diese Situation kann beispielsweise auch in den Regeln vorgegeben werden. Auch kann ein Edge Knoten 1 die Aufforderung nach Ausführung einer Funktion auch ablehnen, z.B. wenn der Batteriestand niedrig ist.

In einer weiteren Ausprägung werden die Wichtigkeit und Dringlichkeit der Funktionsausführung mit in die Aufgabenanfrage aufgenommen. Diese können dann beispielsweise durch Kostenfunktionen interpretiert werden und die mobilen Edge Knoten 1 können potenziell dazu gebracht werden, bestimmte Kontexte bewusst zu erzeugen oder ggf. länger zu erhalten (z.B. Umwege in Kauf nehmen, um die Ausführung einer Funktion zu garantieren). Dies kann auch weiterhin dahin ausgeprägt werden, dass diese direkt technisch auf eine geschäftliche Funktion projiziert und beispielsweise mit Smart Contracts verbindlich in einem offenen Eco System angeboten werden und die Ausführung fälschungssicher dokumentiert wird. Hierzu kann beispielsweise die Blockchain Technologie zum Einsatz kommen.

Funktionen für das System sind beispielsweise:
- Datensammel-Funktionen "Data Mule": Wenn die mobiles Einheit im Bereich a ist, dann stelle über Kommunikationsschnittstelle x zu Systemen vom Typ y eine Verbindung her, nimm Temperatur Sensordaten auf, Vorverarbeite sie nach Funktion b, und lade die Ergebnisdaten beim Vorbeikommen an Station c hoch, welche die Daten weiter leiten soll.
- Deployment Funktionen "Update/ Installation Mule": Wenn mobile Einheit an Komponenten mit folgenden Eigenschaften x,y vorbeikommt, lade per direkter Kommunikation folgendes Update hoch und authentisiere dich mit dem Zertifikat z.
- Kommunikations-Gateway "Comm Mule": Wenn mobiles Einheit sich voraussichtlich für x Stunden im Bereich a, b aufhält, stelle den Komponenten c,d für 60 Min einen Kommunikationslink e mit den Diensteigenschaften f zur Verfügung.
- Analytics Funktionen "Analytics Mule": Wenn mobile Einheit sich voraussichtlich für x Stunden im Bereich a,b aufhält, sammle von den lokalen Sensortypen c, d für 60 Min die Daten ein, analysiere lokal die Daten mit Model e, und sende die Daten via Kommunikationslink f, an g.

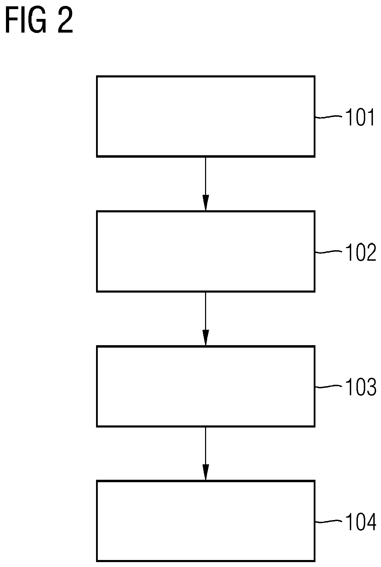

FIG. 2 zeigt ein Ablaufdiagramm eines erfindungsgemäßen Verfahrens zur Bereitstellung von Funktionalitäten einer mobilen Einheit, beispielsweise eines mobilen Edge Knoten einer Edge Cloud, für eine davon abgesetzt benötigte Funktion einer Nachfrageeinheit. Die Nachfrageeinheit kann auch als Aufgaben-/Funktionsersteller Komponente bezeichnet werden.

In einem ersten Schritt 101 wird in der mobilen Einheit die von einer Nachfrageeinheit benötigte Funktion geladen und somit vorgehalten, um bei Bedarf ausgeführt zu werden. In einem zweiten Schritt 102 wird ein für eine kontextabhängige Ausführung der Funktion zu verwendendes Kontextregelwerk in die mobile Einheit geladen und ist damit in der mobilen Einheit verfügbar. In einem dritten Schritt 103 wird bei einer Erfüllung einer oder mehrerer Regeln des Kontextregelwerks die Funktion in der mobilen Einheit ausgeführt. In einem abschließenden vierten Schritt 104 wird das Ergebnis der Ausführung der Funktion an die Nachfrageeinheit übermittelt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: Edge Knoten
- 1.1: Kontext Management Modul
- 1.2: Regel Engine Modul
- 1.3: Funktion Runtime Modul
- 1.4: Regel Management Modul
- 1.5: Funktions-Repository Modul
- 1.6: Kontext Predictor Modul
- 1.7: Kontext Historie Modul
- 1.8: Kontext Sensor Modul
- 2: Aufgaben-/Funktionsersteller Komponente
- 3: Funktions-Repository Komponente
- 4: Movement, Path, Coverage und Context Predictor Komponente
- 5: Edge Cloud

- 101: Laden einer Funktion
- 102: Laden eines Regelwerks
- 103: Ausführen der Funktion
- 104: Übertragung der Ergebnisse

## Patentansprüche

1. Automatisiertes Verfahren zur Bereitstellung von Funktionalitäten mindestens einer mobilen Einheit (1) für mindestens einer davon abgesetzt benötigten Funktion einer Nachfrageeinheit (2),
- wobei in der mobilen Einheit (1) die benötigte Funktion vorgehalten wird (101),
- wobei die Ausführung der Funktion kontextabhängig ist,
- wobei für die Ausführung der Funktion ein Kontextregelwerk in der mobilen Einheit (1) vorgehalten wird (102) und
- wobei bei einer Erfüllung einer oder mehrerer Regeln des Kontextregelwerks die Funktion in der mobilen Einheit (1) ausgeführt wird (103).

2. Verfahren nach Anspruch 1, wobei die mobile Einheit (1) ein Edge Knoten einer Edge Cloud (5) ist und die Nachfrageeinheit (2) ein Teil der Edge Cloud (5) ist.

3. Verfahren nach Anspruch 1 oder 2, wobei nach dem Ausführen der Funktion das Ergebnis an die Nachfrageeinheit (2) gemäß dem Kontextregelwerk übermittelt (104).

4. Verfahren nach einem der vorhergehenden Ansprüche, wobei aufgrund eines Vorhersagemodells das Regelwerk und die mindestens eine Funktion auf mindestens zwei mobilen Einheiten (1) redundant vorzuhalten, wobei das Vorhersagemodell ausgebildet ist, über die geschaffene Redundanz eine vorgegebene Wahrscheinlichkeit, die Funktion auszuführen, zu erreichen.

5. Verfahren nach einem der vorhergehenden Ansprüche, wobei die mobile Einheit (1) eingerichtet ist, weiteren mobilen Einheiten (1) zu übermitteln, welche Regeln bei der mobilen Einheit (1) getriggert haben und welche Funktion ausgeführt wird.

6. Verfahren nach einem der vorhergehenden Ansprüche, wobei die Nachfrageeinheit (2) eingerichtet ist, die Wichtigkeit und/oder Dringlichkeit der Ausführung der Funktion an die mobile Einheit (1) zu übertragen.

7. System (5), **gekennzeichnet durch**:
- mindestens eine Nachfrageeinheit (2),
- mindestens eine mobile Einheit (1), die eingerichtet ist, Funktionalitäten für mindestens einer davon abgesetzt benötigten Funktion der Nachfrageeinheit (2) bereitzustellen und bei Bedarf auszuführen, wobei die Ausführung der Funktion kontextabhängig ist,
- ein in der mobilen Einheit (1) ausgebildetes Regel Engine Modul (1.2), das eingerichtet ist, die Funktion anhand eines in dem Regel Engine Modul (1.2) gespeicherten Kontextregelwerks auszuführen, wobei bei einer Erfüllung einer oder mehrerer Regeln des Kontextregelwerks die Funktion in der mobilen Einheit (1) ausgeführt wird oder die schon ausgeführte Funktion gestoppt wird.

8. System nach Anspruch 7, **gekennzeichnet durch**:
- ein in der mobilen Einheit (1) ausgebildetes Funktion Runtime Modul (1.3), das eingerichtet ist, die Funktion zu instanziieren und diese isoliert von weiteren Funktionen auszuführen.

9. System nach Anspruch 7 oder 8, **gekennzeichnet durch**:
- ein in der mobilen Einheit (1) ausgebildetes Kontext Management Modul (1.1), das eingerichtet ist, den aktuellen Kontext der mobilen Einheit (1) zu ermitteln.

10. System nach einem der Ansprüche 7 bis 9, **gekennzeichnet durch**:
- ein in der mobilen Einheit (1) ausgebildetes Regel Management Modul (1.4), das eingerichtet ist, das Kontextregelwerk vorzuhalten.

11. System nach einem der Ansprüche 8 bis 10, **gekennzeichnet durch**:
- ein in der mobilen Einheit (1) ausgebildetes Funktions-Repository Modul (1.5), das eingerichtet ist, die Funktionen zu speichern, die potenziell ausgeführt werden sollen, und dem Funktion Runtime Modul (1.3) zur Verfügung zu stellen.

12. System nach einem der Ansprüche 7 bis 11, **gekennzeichnet durch**:
- ein in der mobilen Einheit ausgebildetes Kontext Predictor Modul (1.6), das eingerichtet ist, den Kontext der mobilen Einheit (1) vorherzusagen.

13. System nach einem der Ansprüche 7 bis 12, **gekennzeichnet durch**:
- ein in der mobilen Einheit (1) ausgebildetes Kontext Sensor Modul (1.8), das eingerichtet ist, Informationen über den Kontext zu generieren, insbesondere Daten von Sensoren.

14. System nach einem der Ansprüche 7 bis 13, **gekennzeichnet durch**:
- eine Movement, Path, Coverage und Kontext Predictor Komponente (4), die eingerichtet ist, den Komponenten des Systems (5) Kontexte vorherzusagen, insbesondere Bewegungsprofile, und der mobilen Einheit (1) zur Verfügung zu stellen.

15. System nach einem der Ansprüche 7 bis 14, **dadurch gekennzeichnet,**
**dass** das System als Edge Cloud (5) und die mobile Einheit als Edge Knoten (1) ausgebildet sind.
